# EUROPÄISCHE PATENTSCHRIFT

(11) **EP 0 367 967 B1**
(45) Veröffentlichungstag und Bekanntmachung des Hinweises auf die Patenterteilung: **07.09.1994**
(21) Anmeldenummer: 89117870.9
(22) Anmeldetag: 27.09.1989
(51) Int. Cl.: B21B 45/02

(54) **Verfahren und Vorrichtung zur Kühlung und Schmierung von Walzen und Walzgut beim Kaltwalzen**
Method and device for cooling and lubricating cylinders and rolling stock during cold rolling
Procédé et dispositif pour refroidir et lubrifier des cylindres et des matières à laminer pendant laminage à froid

(30) Priorität: 18.10.1988 DE 3835460
(43) Veröffentlichungstag der Anmeldung: 16.05.1990
(73) Patentinhaber: SMS SCHLOEMANN-SIEMAG AKTIENGESELLSCHAFT, 40237 Düsseldorf (DE)
(72) Erfinder: Schimion, Werner, D-5912 Hilchenbach (DE)
(74) Vertreter: Müller, Gerd, Dipl.-Ing.

(56) Entgegenhaltungen:
- EP-A- 0 054 172
- DE-A- 2 140 709
- DE-B- 2 038 873
- US-A- 4 315 421
- PATENT ABSTRACTS OF JAPAN Band 6, Nr. 109 (M-137)(987), 19 Juni 1982 & JP-A-57 39023 (SHIN NIPPON SEITETSU) 04.03.1982
- PATENT ABSTRACTS OF JAPAN Band 7, nr. 63 (M-200)(1208), 16 März 1983 & JP-A-57 206514 (KOBE SEIKOSHO) 17.12.1982

## Beschreibung

Die Erfindung betrifft ein Verfahren zur Kühlung und Schmierung der Walzen in einem Walzgerüst beim Kaltwalzen von Metallbändern unter Zuführung von Emulgatoren und zumindest eine Ölphase enthaltender Öl-/Wasser-Emulsionen mittels Walzspalt-Emulsionsdüsen, wobei die Emulsion vor den Walzen des Walzgerüstes bzw. vor dem Bandeinlauf in den von Arbeitswalzen gebildeten Walzspalt in einem Dispergator durch getrennte Zuführung der die Emulsion bildenden Medien hergestellt wird und die Emulsion nach Erfüllung ihrer Kühl-/Schmierfunktion hinter dem Walzgerüst gesammelt, getrennt und in getrennten Flüssigphasen separat zur Bildung der Eingangsemulsion verwendet werden. Die Erfindung betrifft auch eine Vorrichtung zur Durchführung des Verfahrens. Ein gattungsgemäßes Verfahren sowie ein gattungsgemäße Vorrichtung ist in DE-B-2 038 873 dargestellt.

Bei der spanlosen Umformung von Metallen ist der technologischen Schmierung und Kühlung der Metalle immer größere Bedeutung beizumessen, um die gestiegenen Anforderungen an die Produktqualität während des Produktionsprozesses erfüllen zu können. Insbesondere wird während des Umformungsprozesses von Metallbändern in Walzgerüsten eine möglichst genaue Einhaltung bestimmter Temperaturen sowie eine optimale Oberflächengeometrie von Walzen und Walzgut verlangt, um beim Kaltwalzen eine höhere Produktqualität des Walzbandes hinsichtlich Oberfläche und Planheit zu gewährleisten. Die hydrodynamische Trennung der Arbeitsflächen von Walzballen und Bandoberfläche hat einen weiteren Einfluß auf die Produktqualität. Als technologischer Schmierstoff werden Emulsionen mit walzaktiven Zusätzen diesen Anforderungen beim Kaltwalzen von Feinblechen im allgemeinen gerecht. Die Wirkung von Kühlung, Schmierung und Kraftübertragung im Walzspalt wird sowohl von den rheologischen Faktoren der Emulsionen als auch von dem Zustand der Emulsion bei der Zuführung zum Walzspalt beeinflußt. Bei der Planung und beim Betrieb eines Kaltwalzwerkes kommt der Auslegung der Kühl- und Schmiersysteme die entsprechend große Bedeutung zu.

So arbeiten bekannte Emulsions-Umlaufanlagen für Kaltwalzwerke mit mehreren Emulsionssammelbehältern, wobei die Kaltwalz-Emulsion im allgemeinen aus einer Dispersion von Öl in Wasser besteht mit eingearbeiteten Emulgatoren, die die Stabilität der Emulsion gewährleisten sollen. Jeder Sammelbehälter enthält eine Kaltwalz-Emulsion mit einer anderen Emulsionscharakteristik. Hierdurch wird ermöglicht, das Kaltwalzwerk mit verschiedenen Kühl-Schmier-Medien bzw. Kühl-Schmier-Konzentrationen zu versorgen. Jedes Walzgerüst verfügt über einen separaten Emulsionszulauf, bestehend aus Pumpe, Filter sowie Meß- und Regelstrecke. Durch Aufteilung der Spritzbalken in Düsenzonen ist die Mengenverteilung der Emulsion über die Bandbreite des Metallbandes frei wählbar zu steuern. Aus Sammelgruben unter den Gerüsten wird die Emulsion in die Emulsions-Sammelbehälter zurückgepumpt. Da jeder Emulsions-Sammelbehälter eine Emulsion mit vorgegebener Charakteristik für die Viskosität und Dichte bzw. für die Kühl- und Schmiereigenschaften und für weitere Parameter, wie Dispersionsgrad, aufweist, ist es also während des Walzbetriebes nur möglich, auf jeweils eine dieser vorgegebenen Emulsionen zurückzugreifen. Darüber hinaus müssen diese Emulsionssammelbehälter ausreichend groß bemessen sein, da sie zugleich als Sedimentationsbecken wirken, in denen die Emulsionsvorreinigung durchzuführen ist. Dies bedeutet einen hohen Aufwand für Behälterbau und für maschinentechnik sowie einen großen Raumbedarf für die Anlagentechnik. Auch hat sich gezeigt, daß die herkömmlichen Kaltwalz-Emulsionen von Fremdverschmutzungen nur unzureichend gereinigt werden können. Infolge der Fremdverschmutzung handelt es sich nämlich bei der Emulsion nicht um ein Dreistoff-Gemisch, sondern um ein Mehrstoffgemisch. Durch den Umformungsprozeß entstehen metallische Abriebe und Crack-Produkte aus der Ölphase. Durch Fremdöl-Zutritt bspw. aus Leckagen der Hydrauliksysteme wird also ein Mehrphasen-Gemisch, aus dem die die Schmierfähigkeit und die Bandsauberkeit beeinträchtigenden Stoffe nicht mehr ausreichend und genau genug entfernt werden können. Ferner hat sich gezeigt, daß insbesondere Eisenabrieb aus dem Umformprozeß , der fast ausschließlich adhäsiv an die Ölphase gebunden wird, den Charakter und die Schmierfähigkeit der Emulsion nachhaltig beeinflußt. Weiterhin lehrt die Erfahrung, daß durch unzureichende Abdichtung zwischen den einzelnen Gerüsten bspw. in einer mehrgerüstigen Kaltwalzanlage Emulsions-Verschleppungen von einem System in das andere unvermeidlich sind und dadurch die unterschiedliche Wirkungsweise der Emulsionen aufheben.Auch verändert der ständige Umlauf einer vorgemischten Emulsion deren inneren Aufbau und ihr Schmiervermögen.

Aus der EP-A-0 054 172 ist ein Verfahren zum Walzen von spannungsfreiem Walzband durch Beeinflussung des Reibwertes zwischen den Bandoberflächen und den Walzenoberflächen bekannt. In Abhängigkeit von den hinter dem Walzgerüst gemessenen Bandspannungswerten wird zusätzlich zu der in den Walzspalt gedüsten Walzöl-Emulsion ein Walzgrundöl auf die Oberfläche des Walzbandes aufgebracht, bevor das Walzband in das Walzgerüst einläuft. Durch die Zusätzliche Grundöl-Auftragung auf das Walzband konnte eine entsprechende Planheits-Beeinflussung des Kaltwalzbandes erfolgen.

Aus der DE-B-2 038 873 ist bei einem Walzgerüst eine Emulsions-Umlaufanlage bekannt, bei der den Walzen des Walzgerüstes und dem Walzspalt Dispergatoren zugeordnet sind, in die jeweils eine druckbeaufschlagte Leitung für eine Wasser-Phase und eine Öl-Phase einmünden und wobei mit dem Dispergator Spritzdüsen für die Emulsion verbunden sind, die über die Länge der Walzen verteilt sind. Unterhalb des Walzgerüstes ist eine Sammelwanne angeordnet, die mit dem Behälter zur Amulgierung der gebrauchten Emulsion und mit Behältern zur getrennten Aufbereitung ihrer Öl- und Wasserbestandteile verbunden ist. Rückführleitungen für die getrennten Flüssigkeits-Phasen Öl/Wasser sind mit dem Dispergator verbunden. Die beiden Mittel, Kühlmittel und Schmiermittel, sollen in Kühleinrichtungen und Reinigungseinrichtungen wie Filter oder dergleichen behandelt werden. Das genaue Gewichtsverhältnis von Kühlmittel und Schmiermittel soll sich jeweils nach der erforderlichen Kühlleistung und nach der Walzgeometrie, insbesondere der Dickenabnahme richten. Die Kühlmittelmenge und die Schmiermittelmenge sollen sich im Dauerbetrieb nachregeln lassen. Dabei ist völlig offengelassen, wie die Optimierung der Kühlung und Schmierung der Walzen im Detail auszusehen hat.

Den heutigen großen Anforderungen an die Produktqualität von kaltgewalzten Blechen und insbesondere die Anforderung der Walzwerke an einen noch höheren Produktionsausstoß beim Kaltwalzen von Stahlband in einem Kaltwalzwerk kann nur dann entsprochen werden, wenn noch gezielter und noch genauer als bisher auf Kühl- und Schmiervorgänge im Walzspalt bzw. den Walzen Einfluß genommen werden kann. Eine höhere produktbezogene Qualität kann also nur gewährleistet werden, wenn durch eine bewußte Steuerung/Regelung der Reibungsbeiwerte im Spalt zwischen Walze und Walzgut die Eigenschaften der verwendeten Emulsionen, die den Walzen zugeführt wird, verzögerungsfrei geändert werden können und hochgradig gereinigte Umlaufmedien verwendet werden können, die die Emulsionseigensschaften stabilisieren.

Bei diesem technologischen Hintergrund besteht die Aufgabe der vorliegenden Erfindung darin, ein neues Kühl-/Schmiersystem für Kaltwalzwerke zu konzipieren, mit dem jede beliebige Ölkonzentration und jeder beliebige Dispersionsgrad in der Emulsion jederzeit und mit möglichst geringer Zeitverzögerung einstellbar ist. Die verwendeten Öle sollen gezielt mit walzaktiven Komponenten gemischt werden können. Auch soll eine verbesserte Reinigung der hinter dem Walzwerk aufgefangenen Medien gewährleistet werden, indem die aus der gebrauchten Emulsion getrennten Flüssigphasen jeweils separat aufbereitet und gereinigt werden. Der Aufwand an Behälterbau sowie die damit verbundene Maschinentechnik für Reinigung und Zuführung des Kühl-/Schmiermittels soll ebenso vermindert werden, wie der Verbrauch an umweltbeeinflussenden Emulgatoren.

Diese Aufgabe wird erfindungsgemäß mit den verfahrenstechnischen Maßnahmen gemäß Anspruch 1 und anlagentechnisch mit den Merkmalen des Anspruch 6 gelöst. Die Unteransprüche 2 bis 5 bzw. die Unteransprüche 7 bis 10 stellen verfahrenstechnisch bzw. anlagentechnisch weitere Ausgestaltungen der Erfindung dar.

Infolge der getrennten Zuführung der die Emulsion bildenden Medien, welche sich erst unmittelbar im oder vor dem Walzgerüst in der gewünschten Form zu der Emulsion vereinigen und welche nach Erfüllung ihrer Kühl-/Schmierfunktion wieder getrennt werden, ergibt sich eine Vielzahl von Vorteilen:
Es hat sich nämlich gezeigt, daß die Schmierfilmdicke beim Abwälzen der Walzen auf dem nahezu ebenen Walzband ein die Oberflächengüte von kaltgewalztem Bandstahl überwiegend bestimmender Faktor ist. Der Aufbau einer dem jeweiligen Walzvorgang angepaßten Schmierfilmdicke ist dabei von mehreren Faktoren abhängig, von denen sich nunmehr bevorzugt der Schmierstoff-Faktor beeinflussen läßt, in welchem die Viskosität des Schmiermittels, das Mischungsverhältnis von Schmierstoff und Wasser sowie der Dispersionsgrad des Schmierstoffes im Wasser eingehen. Durch die beanspruchten Maßnahmen läßt sich also die Schmierfilmdicke in bestimmten Walzspaltbereichen kurzfristig und kontinuierlich beeinflussen bzw. ändern, wodurch Einfluß genommen werden kann auf das hydrodynamische Druckfeld zwischen den Arbeitsflächen im Walzspalt beim Kaltwalzen von Metallband. So kann kurzfristig auf die Produktqualität des Metallbandes hinsichtlich der Oberflächengüte und der Planheit sowie auf den Produktdurchsatz Einfluß genommen werden, indem die kühlende und schmierende Emulsion mit einer dem jeweiligen Walzvorgang angepaßten Viskosität, Konzentration, Beständigkeit etc. dem Walzwerk zugeführt wird. Die Konzentration der Emulsion ist je nach den vorgegebenen Walz- und Betriebsbedingungen in weiten Bereichen, nämlich zwischen einem Ölanteil größer/gleich Null % und kleiner/gleich 100 % einstellbar.

Weitere Vorteile ergeben sich hinsichtlich der Emulsionsaufbereitung, indem durch die Abwesenheit bzw. durch äußerst geringen Einsatz von umweltschädlichen Emulgatoren die Wasser- und Altölaufbereitung kostengünstig und schadstoffarm ist, insbesondere weil das zur Emulsionsbereitung verwendete Umlauföl bzw. Umlaufwasser nicht verworfen werden muß. Auf bestimmte Emulgatoren kann erfindungsgemäß verzichtet werden, weil die Stabilität der in unmittelbarer Nähe zum Walzgerüst erzeugten Emulsion geringer sein kann im Vergleich zu herkömmlichen Emulsions-Umlaufanlagen mit großen vom Walzgerüst weit entfernt angeordneten Emulsionsbecken.
Alle Öl-in-Wasser-Gemische können erfindungsgemäß im freien Fall in eine einfach gestaltete unterhalb des Walzgerüstes angeordnete Sammelwanne weitgehend laminar abfließen, sodaß die Stofftrennung in der Trennzone bzw. das Aufbrechen der Emulsion verhältnismäßig schnell erfolgt. Hierdurch kann das Trennbecken kleiner und kostengünstiger gestaltet werden. Sollte ein freies Gefälle für die Öl-in-Wasser-Gemische nicht zur Verfügung stehen, kann auf kostengünstige wirbelarme Pumpen, zum Beispiel in Form von Kanalradpumpen, vorzugsweise in Einschaufelrad-Ausführung zurückgegriffen werden.
Infolge der getrennten Reinigung der Öl- und der Wasserphasen sind die darin enthaltenen Fremdstoffe wesentlich einfacher und effektiver zu entfernen und die beiden Phasen Wasser und Öl behalten über eine lange Gebrauchsdauer gleichbleibende Eigenschaften. Besonders effektiv läßt sich auf dieser Weise der Eisenabrieb aus dem Umformprozeß fast vollständig aus dem Umlauföl entfernen, da der Eisenabrieb den Charakter und die Schmierfähigkeit der Emulsion besonders nachteilig beeinflußt.
Wenn erfindungsgemäß die Emulgatoren zunächst in der Ölphase bzw. in der Wasserphase gelöst werden, ist die jeweilig geforderte Charakteristik der Emulsion besonders schnell einstellbar, besonders dann, wenn mehrere Behälter mit unterschiedlich eingemischten Emulgatoren zur Verfügung stehen.

Gemäß einer Weiterbildung der Erfindung wird vorgeschlagen, zumindest einem Teil der Walzspalt-Emulsionsdüsen ein Walzgrundöl, zum Beispiel ein reines Kerosin unter Umgehung des Dispergators zuzuführen, um bei extremen Walzbedingungen wie dem Folienwalzen mit Banddicken von wenigen Mikron ein Reißen der Folie zu verhindern.

In Ausgestaltung der Erfindung wird vorgeschlagen, daß die Emulsion eine Öl-in-Wasser-Emulsion ggfs. mit die Emulsionscharakteristik steuernden Emulgatoren ist, deren Öl- und Wasser Bestandteile zunächst getrennt aufgeheizt und/oder gekühlt und bei vorgegebener Temperaturkonstanz mit hohem Druck einem Dispergator zugefördert werden. Hierdurch ergibt sich eine bewußte und getrennte Beeinflussung der drei Aufgaben eines Kühl-/Schmiermittels, nämlich Schmieren, Kühlen und Sauberhalten von Walzen und Walzband. So wird eine Walzsituation geschaffen, bei der alle drei Aufgaben des Kühl-/Schmiermittels jeweils unabhängig voneinander bestmöglich und in gewünschter Weise erfüllt werden. So kann erfindungsgemäß die den Walzen, insbesondere den Stützwalzen des Walzgerüstes aufgespritzte Emulsion gegenüber der in den Walzspalt eingespritzten Emulsion eine geringere Schmierfähigkeit aufweisen. Dies ist beispielweise dann wünschenswert, wenn die Kontaktzone zwischen Stütz- und Arbeitswalze im Vergleich zur Umformzone im Walzspalt schlechter geschmiert sein soll, damit beim Stützwalzenantrieb die Umfangskraft ohne Durchrutschen auf die Arbeitswalze übertragbar ist. Ein besonderer Vorteil der Erfindung ergibt sich dann, wenn die Charakteristik der in den Walzspalt eingespritzten Emulsion entlang der Walzenachse zeitlich und/oder zonenmäßig gesteuert wird, wodurch besonders effektiv auf die Planheit des gewalzten Metallbandes Einfluß genommen werden kann.

Die Erfindung bezieht sich auf eine Vorrichtung zur Durchführung des zuvor geschilderten erfindungsgemäßen Verfahrens und zeichnet sich durch Merkmale des Patentanspruchs 6 aus. Obwohl die hier vorgeschlagene Emulsionsumlaufanlage ein optimales Kühl- und Schmiersystem für eine noch höhere Produktqualität bietet, kann sie im Vergleich zu herkömmlichen Anlagen kleiner und kostengünstiger gebaut werden; der Behälterbau kann reduziert werden; die zugehörige Maschinentechnik kann einfacher gestaltet werden.

In Ausgestaltung der Anlagentechnik kann in besonders vorteilhafter Weise die Eigenschaft der hergestellten Emulsion eingestellt werden, wenn in den Rückführleitungen der getrennten Flüssigphasen Öl/Wasser ein Wärmetauscher bzw. eine Heizvorrichtung und eine Druckpumpe angeordnet sind.

Ein weiterer Vorteil bei der erfindungsgemäßen Emulsions-Umlaufanlage zeigt sich darin, daß entlang der Walzenachse und/oder unterhalb und oberhalb des Walzbandes mehrere Emulsionsdüsen zonenmäßig zusammengefaßt und einem Dispergator mit zugehöriger Meß- und Regeleinrichtung zugeordnet sind, wobei zweckmäßigerweise der einzelne Dispergator zugleich Spritzdüse für die Emulsion sein kann und mehrere solcher Dispergatoren auf Spritzbalken unmittelbar vor den Walzen bzw. vor dem Walzspalt des Walzgerüstes angeordnet sind. Besonders zweckmäßig ist der Regler für Druck und Temperatur in den Reinölleitungen bzw. in den Reinwasserleitungen mit einem hinter dem Walzgerüst und quer zum Walzband angeordneten Zugspannungsmeßorgan verbunden. Diese Anlagentechnik ermöglicht eine auf den jeweiligen Walzvorgang optimierte Einstellung bestimmter Schmier- und Kühleigenschaften der Emulsion und der Dispergator erzeugt einen gewünschten Dispersionsgrad, das heißt eine bestimmte Öltröpfchengröße und deren gleichmäßige Verteilung im Wasserstrom unmittelbar dort, wo diese Eigenschaften der Emulsion walztechnisch gefordert werden.

Die Erfindung wird nachfolgend anhand eines Ausführungsbeispiels näher erläutert. Es zeigen
- Figur 1: das Prinzipschema eines Kaltwalzgerüstes mit Stützwalzenantrieb und Emulsions-Umlaufanlage,
- Figur 2: das Prinzipschema einer Aufbereitungsanlage für die gebrauchte Walzemulsion.

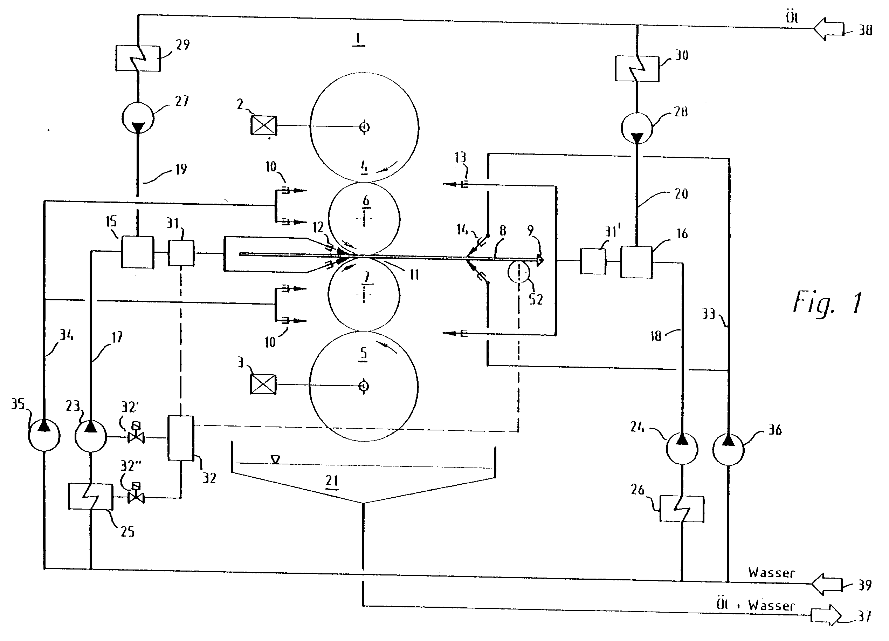

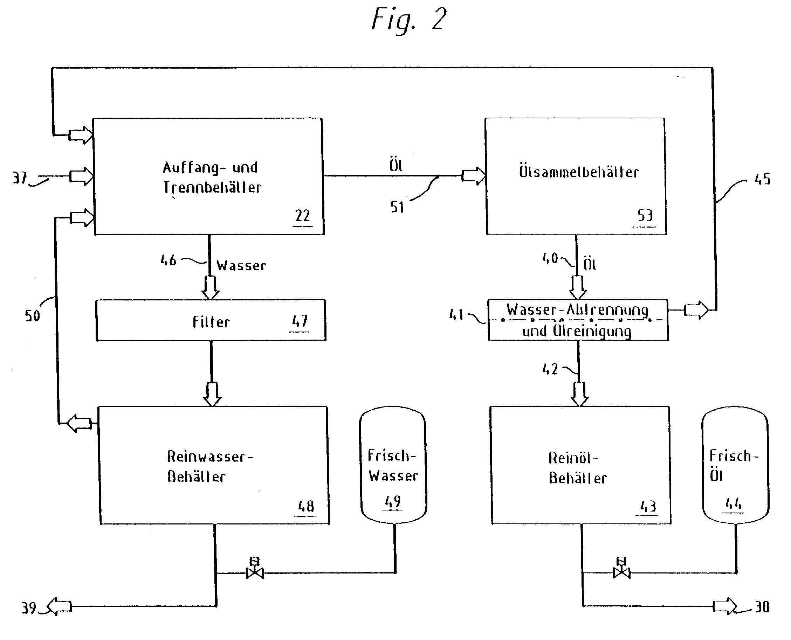

Figur 1 zeigt das Kaltwalzgerüst 1 mit Stützwalzenantrieb 2 und 3. Figur 2 zeigt die Anordnung von Behältern, in denen die Emulsion in Wasser und Öl getrennt wird und diese getrennt gelagert und im Zusammenwirken mit Filter- und Reinigungseinrichtungen aufbereitet werden.

Zurückkommend auf Fig. 1 weist das Kaltwalzgerüst mit Stützwalzenantrieb zwei Stützwalzen 4, 5 und zwei Arbeitswalzen 6, 7 auf, zwischen denen ein metallisches Walzband 8 in der mit Pfeil 9 angegebenen Durchlaufrichtung ausgewalzt wird. Am Einlauf des Walzgerüstes 1 befinden sich Spritzdüsen 10 für Kühlwasser, die sich auf einem nicht näher dargestellten Spritzbalken befinden. Unmittelbar vor dem Walzspalt 11 und in der Einlaufzone des Walzbandes 8 in das Walzgerüst 1 sind unterhalb und oberhalb des Walzbandes Emulsionsdüsen 12 angeordnet, die sich ebenfalls auf einem nicht näher dargestellten Spritzbalken befinden. In Durchlaufrichtung 9 des Walzbandes 8 gesehen befinden sich hinter dem Walzgerüst 1 weitere Emulsionsdüsen 13, die auf die Kontaktzone zwischen Arbeitswalze 6 und Stützwalze 4 bzw. Arbeitswalze 7 und Stützwalze 5 gerichtet sind. In kurzer Entfernung hinter dem Walzgerüst sind in ebenfalls schematischer Darstellung weitere Spritzbalken mit Spritzdüsen 14 oberhalb und unterhalb des Walzbandes zu sehen.

In räumlicher Nähe zu den Stützwalzen 4, 5 des Walzgerüsts 1 und in räumlicher Nähe zu dem zwischen den Arbeitswalzen 6, 7 gebildeten Walzspalt 11 sind Dispergatoren 15 und 16 angeordnet, in die jeweils eine druckbeaufschlagte Leitung 17, 18 für die Wasserphase und eine druckbeaufschlagte Leitung 19, 20 für die Ölphase mit wenigstens einem Emulgator einmünden. Zwischen dem Dispergator 15, 16 und den aus dem Dispergator mit Emulsion beschickten Emulsionsdüsen 12, 13 sind Meßgeräte 31 zur Überwachung der Ölkonzentration bzw. des Dispersionsgrades der Emulsion angeordnet. Unterhalb des Walzgerüsts 1 befindet sich eine Sammelwanne 21 für die Wasser-Öl-Gemische aus dem Walzgerüst, die mit einem Auffang- und Trennbehälter 22 zur Demulgierung der gebrauchten Emulsion verbunden ist. In den Druckleitungen 17, 18 für die aufbereitete Wasserphase ist jeweils eine Pumpe 23, 24 und je ein Wärmetauscher bzw. eine Heizvorrichtung 25, 26 angeordnet. Auch in der Druckleitung 19, 20 für die Ölphase ist je eine Ölpumpe 27, 28 und ein Wärmetauscher 29, 30 angeordnet. Das in der Emulsionsleitung hinter dem Dispergator 15 angeordnete Meßgerät 31 zur Überwachung der Ölkonzentration und des Dispersionsgrades der Emulsion ist mit einem Regler 32 und entsprechenden Stellorganen 32′, 32˝ für die Pumpe 23 und für die Heizvorrichtung bzw. Wärmetauscher 25 verbunden. Der Regler 32 ist meßtechnisch mit einem hinter dem Walzgerüst 1 und quer zum Walzband 8 angeordneten Zugspannungsmeßorgan 52 verbunden. Gleichgeartete Regelkreise befinden sich in der Druckleitung 18 für die Wasserphase bzw. in den Druckleitungen 19, 20 für die Ölphase. DieSpritzdüsen 10 und 14 sind an Wasserleitungen 33, 34 angeschlossen, in denen sich Druckpumpen 35, 36 befinden. Das in Fig. 1 dargestellte System wird mit gereinigtem Umlauföl aus der Reinölleitung 38 und aus der Reinwasserleitung 39 versorgt und über die mit der Sammelwanne 21 verbundenen Öl-Wasser-Gemisch-Leitung 37 entsorgt.

Gemäß Fig. 2 wird die Öl-Wasser-Gemisch-Leitung 37 in den Auffang- und Trennbehälter 22 geleitet. Aus diesem Auffang-und Trennbehälter 22 führt eine die Ölphase führende Leitung 51 in einen Ölsammelbehälter 53, dessen Ausgangsleitung 40 mit einer Ölreinigungsanlage 41 verbunden ist. Aus der Ölreinigungsanlage 41, in der außerdem eine Restwasserabtrennung erfolgt, wird das Reinöl über eine Verbindungsleitung 42 einem Reinölbehälter 43 zugeführt, aus dem die Reinölleitung 38 ausmündet, welche gemäß Fig. 1 mit den Dispergatoren 15 und 16 verbunden ist. Zusätzlich mündet in die Reinölleitung 38 eine Leitung aus dem Frischölbehälter 44. Aus der Ölreinigungsanlage 41 ist eine Wasser enthaltenede Mischphase mit Hilfe der Rückleitung 45 zu dem Auffang- und Trennbehälter 22 zurückgeführt.

Aus dem Auffang- und Trennbehälter 22 für die gebrauchte Emulsion ist eine die Wasserphase führende Druckleitung 46 unter Zwischenschaltung eines Filters 47 in einen Wassersammelbehälter 48 geführt, dessen Ausgangsleitung 39 mit den Dispergatoren 15, 16 gemäß Fig. 1 verbunden ist. In die Reinwasserleitung 39 mündet außerdem eine Leitung aus einem Frischwasserbehälter 49. Aus dem Reinwasserbehälter mündet eine Öl enthaltende Mischphase führende Ausgangsleitung 50 zurück zu dem Auffang- und Trennbehälter 22.

Die Herstellung der Walz-Emulsion erfolgt in unmittelbarer Walzspaltnähe dadurch, daß zunächst die in der Druckleitung 17 für die Wasserphase angeordnete Pumpe 23 das Wasser auf einen gewünschten Druck erhöht. Ein Wärmetauscher 25 bzw. eine entsprechende Heizvorrichtung ermöglicht es, die Wassertemperatur auf einen gewünschten Wert zur nachfolgenden Einstellung bestimmter Viskositätseigenschaften bezüglich der herzustellenden Emulsion zu bringen. Es wird nun aus der Reinölleitung 38 mit Hilfe der Pumpe 27 eine bestimmte Menge Öl entnommen, in der Heizvorrichtung 29 auf eine bestimmte Temperatur erhitzt und mit hohem Druck in den Dispergator 15 eingespritzt. Der Dispergator erzeugt einen gewünschten Dispersionsgrad, d.h. eine bestimmte Öltröpfchengröße und deren gleichmäßige Verteilung im Wasserstrom. Die so hergestellte Dispersion wird nun unmittelbar in den Walzspalt gespritzt. Dies geschieht mit Hilfe mehrerer Emulsionsdüsen 12, die gegebenenfalls zonenmäßig zusammengefaßt sind und sich auf einem Spritzbalken oberhalb und unterhalb des Walzbandes 8 befinden. Ein Meßgerät 31 überwacht ständig die Ölkonzentration bzw. den Dispersionsgrad mit Hilfe eines Reglers 32, der unter Sollwertvorgabe nach Maßgabe der vom Meßorgan 52 gemessenen Zugspannungen des Walzbandes entsprechende Stellorgane 32′, 32˝ der Druckpumpe 23 bzw. der Heizvorrichtung 25 betätigt. In gleicher Weise ist das Meßgerät 31 mit einem nicht näher dargestellten Regler und Stellorganen mit der Druckpumpe 27 bzw. der Heizvorrichtung 29 verbunden, die sich beide in der Druckleitung 19 für die Ölphase befinden. Es ist selbstverständlich auch möglich, unterschiedliche Öl-Konzentrationen und Dispersionsgrade für die oberhalb und unterhalb des Walzbandes 8 angeordneten Spritzbalken zu erzeugen.

Die Herstellung einer Schmieremulsion für die Kontaktzone zwischen Stütz- und Arbeitswalze erfolgt in gleicher Weise wie zuvor beschrieben, indem mit Hilfe der Pumpe 24 und der Heizvorrichtung 26 das Reinwasser und mit Hilfe der Druckpumpe 28 und der Heizvorrichtung 30 die Ölphase unter Druck in dem Dispergator 16 zur Emulsion dispergiert werden. Die Emulsion wird von den Emulsionsdüsen 13 gegen die Kontaktzone zwischen Stütz- und Arbeitswalze gedüst. An dieser Stelle der Emulsionseindüsung in das Walzgerüst wird bewußt eine geringere Ölkonzentration und damit eine schlechtere Schmierung gegenüber der Umformzone eingestellt, damit die Stützwalze 4 und Arbeitswalze 6 bzw. Stützwalze 5 und Arbeitswalze 7 nicht aufeinanderrutschen. Die Ölkonzentration und der Dispersionsgrad werden dabei wie zuvor beschrieben durch ein Meßgerät 31′ und eine entsprechende, jedoch hier nicht näher dargestellte Regeleinrichtung kontrolliert.

Zur Kühlung der Arbeitswalzen 6, 7 bzw. des Walzbandes 8 reicht es aus, wenn nur die Reinwasserphase über die Pumpe 35 und die Leitung 34 mit einem bestimmten Druck diesen Walzen durch die Spritzdüsen 10 zugeführt wird. Dadurch wird die Kühlung von Walzen und Band noch intensiver.

Eine weitere Möglichkeit zur Verbesserung der Bandsauberkeit besteht darin, Wasser aus der Reinwasserleitung 39 mit Hilfe der Pumpe 36 anzusaugen und auf einen hohen Druck zu bringen. Oberhalb und unterhalb des Walzbandes 8 wird mit Hilfe geeigneter Düsen 14 ein scharfer Spritzstrahl erzeugt, der gegen die Bandlaufrichtung (Pfeil 9) Verunreinigungen von der Bandoberfläche abspritzt. Sollte auch hier eine Fettung des Bandes vor dem Aufwickeln erwünscht sein, so kann sowohl in das Abspritzwasser Öl eingemischt wie auch über einen nachgeschalteten Spritzbalken die gewünschte Wasser-/Ölkonzentration auf die Bandoberfläche aufgebracht werden. Eine solche Anordnung kann gegebenenfalls auch am Bandeinlauf zur sektoralen Bandschmierung vorgesehen sein.

Alle Wasser-/Ölgemische fließen in eine Sammelwanne 21 unterhalb des Gerüstes 1 und werden von hier aus entweder im freien Fall oder mit Pumpen durch die Öl/Wasser-Gemisch-Leitung 37 in den Auffang- und Trennbehältern 22 gefördert. Es ist dabei wesentlich, daß durch Pump-und Strömungseinflüsse eine Verwirbelung der Stoffe Öl, Wasser und Schmutz unterbleibt, um die anschließende Demulgierung der Emulsion in dem Behälter 22 nicht zu erschweren. Die in dem Auffang-und Trennbehälter von der gebrauchten Emulsion abgetrennte Ölphase wird in einem Ölsammelbehälter 53 erneut beruhigt und es erfolgt anschließend in der Ölreinigungsanlage 41 eine Reinigung von den metallischen Bestandteilen und eine zusätzliche Wasserabtrennung. Die Wasser enthaltende Ölphase wird über die Rückführleitung 45 als Mischphase dem Auffangund Trennbehälter 22 zur erneuten Trennung zurückgeführt. Das gereinigte Öl wird in dem Reinölbehälter 43 gesammelt, gegebenenfalls wird Frischöl aus dem Frischölbehälter 44 zugegeben. In den Frischölbehälter 44 können die Emulsion steuernde Emulgatoren eingemischt werden. Auch können mehrere Behälter angeordnet sein, um die herzustellende Emulsion in weiten Bereichen steuerbar zu machen. Die Reinölleitung 38 ist wie zuvor zu Fig. 1 beschrieben, mit den Dispergatoren 15 und 16 verbunden.

Die in dem Auffang- und Trennbehälter 22 abgetrennte Wasserphase wird mit Hilfe des Filters 47 von Schmutzbestandteilen gereinigt und in einem Reinwaserbehälter gesammelt und erneut beruhigt. Eine gegebenenfalls eine Ölphase enthaltende Mischphase wird über die Leitung 50 zur erneuten Phasentrennung in den Auffang-und Trennbehälter 22 zurückgeführt. Das Reinwasser wird gegebenenfalls unter Zumischung von Frischwasser aus dem Frischwasserbehälter 49 über die Reinwasserleitung 39 in der zu Fig. 1 beschriebenen Weise den Dispergatoren 15 und 16 zur Herstellung der Emulsion zugeleitet.

Mit der oben beschriebenen erfindungsgemäßen Emulsions-Umlaufanlage läßt sich jede beliebige Ölkonzentration in der Emulsion jederzeit und mit äußerst geringer Zeitverzögerung auf die jeweiligen Vorgaben des Walzprozesses einstellen. Infolge der verzögerungsfreien Flexibilität des vorliegenden Kühl- und Schmiersystems für Kaltwalzwerke ist eine noch bessere Produktqualität hinsichtlich der Oberflächengüte und der Planheit des Walzbandes zu erreichen. Darüber hinaus wird die Aufbereitung der Emulsion vereinfacht und umweltschonender vorgenommen, wobei zugleich die Anlagenkosten im Vergleich zu bisher bekannten Emulsions-Umlaufanlagen gesenkt werden können.

### Bezugszeichenübersicht

- 1: Kaltwalzgerüst
- 2, 3: Stützwalzenantrieb
- 4, 5: Stützwalzen
- 6, 7: Arbeitswalzen
- 8: Walzband
- 9: Durchlaufrichtung
- 10: Spritzdüsen für Kühlwasser
- 11: Walzspalt
- 12: Emulsionsdüsen
- 13: Emulsionsdüsen
- 14: Spritzdüsen
- 15,16: Dispergatoren
- 17,18: Druckleitung für Wasserphase
- 19,20: Druckleitung für Ölphase
- 21: Sammelwanne
- 22: Auffang- und Trennbehälter
- 23,24: Druckpumpe für Wasserphase
- 25,26: Heizvorrichtung / Wärmetauscher
- 27,28: Ölpumpe
- 29,30: Heizvorrichtung / Wärmetauscher
- 31,31′: Meßeinrichtung
- 32: Regler
- 33,34: Wasserleitungen
- 35,36: Druckpumpen für Wasser
- 37: Öl/Wasser-Gemisch-Leitung
- 38: Reinölleitung
- 39: Reinwasserleitung
- 40: Ausgangsleitung
- 41: Ölreinigungsanlage
- 42: Verbindungsleitung
- 43: Reinölbehälter
- 44: Frischölbehälter
- 45: Rückleitung für Mischphase
- 46: Druckleitung für Wasserphase
- 47: Filter
- 48: Wassersammelbehälter
- 49: Frischwasserbehälter
- 50: Rückleitung für Mischphase
- 51: Leitung für Ölphase
- 52: Zugspannungsmeßorgan
- 53: Ölsammelbehälter

## Patentansprüche

1. Verfahren zur Kühlung und Schmierung der Walzen (4-7) in einem Walzgerüst (1) beim Kaltwalzen von Metallbändern (8) unter Zuführung von Emulgatoren und zumindest eine Ölphase enthaltender Öl-/Wasser-Emulsion mittels Walzspalt-Emulsionsdüsen (12, 13), wobei die Emulsion vor den Walzen des Walzgerüstes bzw. vor dem Bandeinlauf in den von Arbeitswalzen gebildeten Walzspalt in einem Dispergator (15, 16) durch getrennte Zuführung der die Emulsion bildenden Medien hergestellt wird und die Emulsion nach Erfüllung ihrer Kühl-/Schmierfunktion hinter dem Walzgerüst (1) gesammelt, getrennt und die getrennten Flüssigphasen separat zur Bildung der Eingangsemulsion verwendet werden,
**dadurch gekennzeichnet**,
daß die Charakteristik der Emulsion nach Maßgabe der vom Walzprozeß vorgegebenen jeweiligen Betriebsbedingungen, insbesondere nach Maßgabe der ermittelten, partiellen Zugspannungen im Walzband (8) bzw. nach Maßgabe der Greifbedingungen zwischen Walze (4-7) und Walzband (8) eingestellt wird und durch einen mengenmäßigen und typenmäßigen Einsatz der zu emulgierenden Medien und der angewandten Emulgiertechnik eingeregelt wird, daß die Emulgatoren zunächst in der Öl-Phase bzw. in der Wasser-Phase gelöst werden, und daß im Dispergator (15, 16) die Ölphase gegebenenfalls zusammen mit Emulgatoren unter Druck in die Wasserphase eingespritzt wird daß vom Dispergator (15, 16) zugleich die Emulsion verdüst wird und die hergestellte Dispersion unmittelbar anschließend auf die Oberfläche der Walzen (4-7) und/oder in den Walzspalt (11) und/oder auf das Walzband (8) gedüst wird und daß die gesammelte Emulsion unter weitgehender Vermeidung von durch Pumpen- und Störungseinflüsse bedingte Verwirbelungen gegebenenfalls unter Zusatz von Dismulgatoren einer Trennzone (22) zur Amulgierung zugeleitet wird, daß die in der Trennzone (22) abgetrennte Ölphase erneut beruhigt wird, und eine gegebenenfalls noch Wasser enthaltende Mischphase in die Trennzone (22) zurückgeleitet wird, während die gereinigte Ölphase dem Dispergator (15, 16) zugeführt wird, und daß die abgetrennte Wasserphase gefiltert und erneut beruhigt wird und eine gegebenenfalls noch Öl enthaltende Mischphase in die Trennzone (22) zurückgeleitet wird, während die gereinigte Wasserphase dem Dispergator zugefördert wird, daß das zur Emulsionsherstellung benutzte Umlauföl und das Umlaufwasser durch Zugabe von Frischöl- bzw. Frischwasser gefrischt werden.

2. Verfahren nach Anspruch 1,
**dadurch gekennzeichnet**,
daß zumindest einem Teil der Walzspalt-Emulsionsdüsen (12, 13) ein Walzgrundöl unter Umgehung des Dispergators (15, 16) zugeführt wird.

3. Verfahren nach Anspruch 1, 2 oder 3,
**dadurch gekennzeichnet**,
daß die Emulsion eine Öl-in-Wasser-Emulsion gegebenenfalls mit die Emulsionscharakteristik steuernden Emulgatoren ist, deren Öl- und Wasserbestandteile zunächst aufgeheizt oder gekühlt bei vorgegebener Temperaturkonstanz mit hohem Druck einem Dispergator (15, 16) zugefördert werden.

4. Verfahren nach einem der Ansprüche 1, 2 oder 3,
**dadurch gekennzeichnet**,
daß die den Walzen (4-7), insbesondere den Stützwalzen (4, 5) des Walzgerüstes aufgespritzte Emulsion gegenüber der in den Walzspalt (1) eingespritzten Emulsion eine geringere Schmierfähigkeit aufweist.

5. Verfahren nach mindestens einem der Ansprüche 1 bis 4,
**dadurch gekennzeichnet**,
daß die Charakteristik der in den Walzspalt (1) eingespritzten Emulsion entlang der Walzenachse zeitlich und/oder zonenmäßig gesteuert wird.

6. Emulsions-Umlaufanlage an einem Walzgerüst zur Durchführung des Verfahrens nach mindestens einem der Ansprüche 1 bis 5, wobei den Walzen (6, 7) des Walzgerüstes und dem Walzspalt Dispergatoren (15, 16) zugeordnet sind, in die jeweils eine druckbeaufschlagte Leitung (17, 19) für eine Wasserphase und eine Ölphase einmünden, wobei der Dispergator mit über die Länge der Walzen verteilten Spritzdüsen (12) für die Emulsion verbunden ist und daß unterhalb des Walzgerüstes eine Sammelwanne (21) angeordnet ist, die mit Behältern zur Amulgierung der gebrauchten Emulsion und mit Behältern (22) zur getrennten Aufbereitung ihrer Öl- und Wasserbestandteile verbunden ist, welche ihrerseits mit Rückführleitungen (38, 39) für die getrennten Flüssigkeitsphasen Öl/Wasser zu den Dispergatoren (15, 16) verbunden sind,
**dadurch gekennzeichnet**,
- daß aus dem Auffang- und Trennbehälter (22) für die gebrauchte Emulsion eine Ölphase führende Leitung (51) in einen Ölsammelbehälter (53) einmündet, der mit einer Ölreinigungsanlage (41) für das Umlauföl und einem Reinölbehälter (43) verbunden ist und daß anschließend die mit einem Frischölbehälter (44) verbundene Reinölleitung (38) mit dem Dispergator (15, 16) verbunden ist, und daß eine eine Mischphase führende Ausgangsleitung (45) der Ölreinigungsanlage (41) zu dem Auffang- und Trennbehälter (22) zurückgeführt ist,
- daß aus dem Auffang- und Trennbehälter (22) für die gebrauchte Emulsion eine die Wasserphase führende Druckleitung (46) unter Zwischenschaltung eines Filters (47) zu einem Reinwasserbehälter (48) geführt ist, dessen auch mit einem Frischwasserbehälter (49) verbundene Ausgangsleitung als Reinwasserleitung (39) mit dem Dispergator (15, 16) verbunden ist und dessen andere eine Mischphase führende Ausgangsleitung (50) zu dem Auffang- und Trennbehälter (22) zurückgeführt ist,
- daß in der Emulsionsleitung hinter dem Dispergator (15, 16) ein Meßgerät (31, 31') zur Überwachung der Ölkonzentration und des Dispersionsgrades der Emulsion angeordnet ist, welches mit einem Regler (32) und entsprechenden Stellorganen (32', 32'') für Druck und Temperatur in den Rückführleitungen für Reinöl (38) und Reinwasser (39) verbunden ist.
- daß der einzelne Dispergator (15, 16) zugleich Düse für die Emulsion ist und daß mehrere solcher Dispergatoren auf Spritzbalken unmittelbar vor den Walzen (4, 6; 5, 7) bzw. vor dem Walzspalt (11) des Walzgerüstes (1) angeordnet sind.

7. Emulsions-Umlaufanlage nach Anspruch 6,
**dadurch gekennzeichnet**,
daß in den Rückführleitungen (38, 39) der getrennten Flüssigkeitsphasen Öl/Wasser ein Wärmetauscher bzw. eine Heizvorrichtung (25, 25; 29, 30) und eine Druckpumpe (23, 24; 27, 28) angeordnet sind.

8. Emulsions-Umlaufanlage nach Anspruch 6 oder 7,
**dadurch gekennzeichnet**,
daß entlang der Walzenachse und/oder oberhalb oder unterhalb des Walzbandes (8) mehrere Emulsionsdüsen (12, 13) zonenmäßig zusammengefaßt und einem Dispergator (15, 16) mit zugehöriger Meß- und Regeleinrichtung (31, 32) zugeordnet sind.

9. Emulsions-Umlaufanlage nach mindestens einem der Ansprüche 6 bis 8,
**dadurch gekennzeichnet**,
daß der Regler (32) für Druck und Temperatur in den Reinölleitungen (19, 20) bzw. Reinwasserleitungen (17, 18) meßtechnisch mit einem hinter dem Walzgerüst (1) und quer zum Walzband angeordneten Zugspannungs-Meßorgan (52) verbunden ist.

## Claims

1. Method for the cooling and lubricating of the rolls (4 to 7) in a roll stand (1) during the cold rolling of metal strips (8) with the supply of emulsifying agents and oil-water emulsion containing at least one oil phase by means of roll gap emulsion nozzles (12, 13), wherein the emulsion is produced in a disperser (15, 16) by separate supply of the media forming the emulsion before the rolls of the roll stand or before the strip entry into the roll gap formed by working rolls and the emulsion after fulfilling its cooling and lubricating function is collected behind the roll stand and separated and the separated liquid phases are used separately for the formation of the input emulsion, characterised thereby, that the characteristic of the emulsion is set in accordance with the respective operating conditions preset by the rolling process, in particular in accordance with the ascertained partial tension stresses in the rolled strip (8) or in accordance with the grip conditions between roll (4 to 7) and rolled strip (8) and adjusted by a deployment according to quantity and type of the media to be emusified and the emulsifying technique which is applied and that the emulsifiers are initially dissolved in the oil phase or in the water phase and that the oil phase in a given case together with emulsifying agents is sprayed under pressure into the water phase in the disperser (15, 16), that the emulsion is atomised at the same time by the disperser (15, 16) and the produced dispersion is immediately following put through nozzles onto the surface of the rolls (4 to 7) and/or into the roll gap (11) and/or onto the rolled strip (8) and that the collected emulsion is led to a separating zone (22) for demulsification whilst largely avoiding turbulences caused by influences of pumps and disturbances and in a given case with the addition of demulsifying agents, that the oil phase separated off in the separating zone (22) is calmed anew, that a mixture phase, which in a given case still contains water, is led back into the separating zone (22) whilst the cleaned oil phase is conducted to the disperser (15, 16) and that the separated-off water phase is filtered and calmed anew and a mixture phase, which in a given case still contains oil, is led back into the separating zone (22) whilst the cleaned water phase is conveyed to the disperser (15, 16) and that the circulating oil and the circulating water, which are used for the production of the emulsion, are freshened by the addition respectively of fresh oil and fresh water.

2. Method according to claim 1, characterised thereby, that a roll base oil is fed to at least a part of the roll gap emulsion nozzles (12, 13) whilst bypassing the disperser (15, 16).

3. Method according to claim 1 or 2, characterised thereby, that the emulsion is an oil-in-water emulsion, in a given case with emulsifying agents controlling the emulsion characteristic, the oil and water components of which are initialled heated or cooled and conveyed to a disperser (15, 16) at high pressure and with preset temperature constancy.

4. Method according to one of the claims 1, 2 and 3, characterised thereby, that the emulsion, which is sprayed onto the rolls (4 to 7), in particular onto the backing rolls (4, 5) of the roll stand, displays a lower lubricating power than the emulsion sprayed into the roll gap (11).

5. Method according to at least one of the claims 1 to 4, characterised thereby, that the characteristic of the emulsion sprayed into the roll gap (11) is controlled in time and/or according to zone along the roll axis.

6. Emulsion circulation plant at a roll stand for the performance of the method according to at least one of the claims 1 to 5, wherein the rolls (6, 7) of the roll stand and the roll gap are associated with dispersers (15, 16), into which open a respective pressure-loaded duct (17, 19) for a water phase and for an oil phase, wherein the disperser is connected with spray nozzles (12), which are distributed over the length of the rolls, for the emulsion and that a collecting trough (21) is arranged underneath the roll stand and connected with containers for the demulsification of the used emulsion and with containers (22) for the separate preparation of their oil and water components, which (containers) are in their turn connected with return ducts (38, 39) for the separated liquid phases of oil and water to the dispersers (15, 16), characterised thereby,
- that a duct (51), which carries an oil phase out of the separating and collecting container (22) for the used emulsion, opens into an oil-collecting container (53), which is connected with an oil-cleaning plant (41) for the circulating oil and a clean oil container (43), that the clean oil duct (38) connected with a fresh oil container (44) is subsequently connected with the disperser (15, 16) and that an output duct (45), which carries a mixed phase, of the oil-cleaning plant (41) is led back to the separating and collecting container (22),
- that a pressure duct (46), which carries the water phase out of the separating and collecting container (22) for the used emulsion, is led with the interposition of a filter (47) to a clean water container (48), the output duct of which is also connected with a fresh water container (49) and connected as clean water duct (39) with the disperser (15, 16) and the other output duct (50) of which carries a mixed phase and is led back to the separating and collecting container (22),
- that a measuring instrument (31, 31') for monitoring the concentration of the oil and the degree of dispersion of the emulsion is arranged in the emulsion duct behind the disperser (15, 16) and connected with a regulator (32) and appropriate setting organs (32', 32'') for pressure and temperature in the return ducts for clean oil (38) and clean water (39) and
- that the single disperser (15, 16) is at the same time a nozzle for the emulsion and that several such dispersers are arranged on spray beams immediately in front of the rolls (4, 6; 5, 7) or in front of the roll gap (11) of the roll stand (1).

7. Emulsion circulation plant according to claim 6, characterised thereby, that a heat exchanger or a heating device (25, 26; 29, 30) and a pressure pump (23, 24; 27, 28) are arranged in the return ducts (38, 39) for the separated liquid phases of oil and water.

8. Emulsion circulation plant according to claim 6 or 7, characterised thereby, that several emulsion nozzles (12, 13) are combined in zones along the roll axis and/or above or below the rolled strip (8) and associated with a disperser (15, 16) with a measuring and regulating equipment (31, 32) belonging thereto.

9. Emulsion circulation plant according to at least one of the claims 6 to 8, characterised thereby, that the regulator (32) for pressure and temperature in the clean oil ducts (19, 20) or the clean water ducts (17, 18) is connected in terms of measurement technique with a tension stress measuring organ (52) arranged behind the roll stand (1) and transversely to the rolled strip.

## Revendications

1. Procédé de refroidissement et de lubrification des cylindres (4-7) dans une cage de laminoir (1) pour le laminage à froid de bandes métalliques (8) avec admission de produits émulsifiants et d'une émulsion huile/eau qui contient au moins une phase huileuse au moyen de buses (12, 13) à émulsion dans la fente de laminage, dans lequel l'émulsion est produite dans un dispositif de dispersion (15, 16) en alimentant de façon séparée les produits qui constituent l'émulsion, devant les cylindres de la cage de laminoir, ou devant l'entrée de la bande dans la fente de laminage formée par les cylindres de travail, et dans lequel l'émulsion est recueillie et séparée derrière la cage de laminoir après avoir rempli sa fonction de refroidissement/lubrification, et les phases liquides séparées sont utilisées séparément pour former l'émulsion de départ,
caractérisé en ce que
la caractéristique de l'émulsion est réglée selon les données des conditions de service respectives prédéterminées par le processus de laminage, en particulier selon la mesure des contraintes de tension partielles déterminées dans la bande laminée (8), ou selon la mesure des conditions d'accrochage entre les cylindres (4-7) et la bande laminée (8), et est régulée par l'emploi selon les quantités et selon le type des produits d'émulsion et des techniques d'émulsion appliquées, en ce que les émulsifiants sont tout d'abord dissous dans la phase huileuse ou dans la phase aqueuse, et en ce que la phase huileuse, le cas échéant ensemble avec des émulsifiants, est injectée sous pression dans la phase aqueuse dans le dispositif de dispersion (15, 16), en ce que l'émulsion est simultanément pulvérisée par l'appareil de dispersion (15, 16), et la dispersion ainsi produite est pulvérisée immédiatement ensuite sur la surface des cylindres (4-7) et/ou dans la fente de laminage (11) et/ou sur la bande à laminer (8), et en ce que l'émulsion rassemblée est amenée à une zone de séparation (22) afin de dissocier l'émulsion, en évitant dans une large mesure les turbulences provoquées par des influences de pompage ou parasites, le cas échéant avec addition de produits anti-émulsion, en ce que la phase huileuse séparée dans la zone de séparation (22) est à nouveau amenée au repos, et en ce qu'on ramène dans la zone de séparation (22) une phase mélangée qui contient encore éventuellement de l'eau, tandis que la phase huileuse purifiée est amenée à l'appareil de dispersion (15, 16), et en ce que la phase aqueuse est filtrée et à nouveau amenée au repos, et une phase mélangée qui contient éventuellement encore de l'huile est ramenée dans la zone de séparation (22), tandis que la phase aqueuse purifiée est fournie à l'appareil de dispersion, et en ce que l'huile en circulation et l'eau en circulation utilisées pour la production de l'émulsion sont complétées par addition d'huile, ou d'eau, fraîche.

2. Procédé selon la revendication 1, caractérisé en ce qu'une huile de base de laminage est amenée à au moins une partie des buses d'émulsion (12, 13) dans la fente de laminage en contournant l'appareil de dispersion (15, 16).

3. Procédé selon l'une quelconque des revendications 1, 2 ou 3, caractérisé en ce que l'émulsion est une émulsion d'huile dans de l'eau, le cas échéant avec des produits émulsifiants qui contrôlent la caractéristique d'émulsion, dont les composants huileux et aqueux sont alimentés sous haute pression à un appareil de dispersion (15, 16) en étant tout d'abord chauffés ou refroidis à une température constante prédéterminée.

4. Procédé selon l'une des revendications 1, 2 ou 3, caractérisé en ce que l'émulsion pulvérisée sur les cylindres (4-7), en particulier les cylindres d'appui (4, 5) de la cage de laminoir, présente une capacité lubrifiante plus faible que l'émulsion injectée dans la fente de laminage (1).

5. Procédé selon l'une au moins des revendications 1 à 4, caractérisé en ce que la caractéristique de l'émulsion injectée dans la fente de laminage (1) est contrôlée dans le temps ou dans l'espace le long de l'axe des cylindres.

6. Installation de recirculation d'émulsion dans une cage de laminoir pour la mise en oeuvre du procédé selon l'une au moins des revendications 1 à 5, dans laquelle des appareils de dispersion (15, 16) sont associés aux cylindres (6, 7) de la cage de laminoir et à la fente de laminage, des conduites sous pression (17, 19) respectives pour une phase aqueuse et pour une phase huileuse débouchant dans lesdits appareils de dispersion, chaque appareil de dispersion étant relié à des buses d'injection (12) pour l'émulsion réparties sur la longueur des cylindres, et dans laquelle un bassin de collecte (21) est agencé en-dessous de la cage de laminoir, ce bassin étant relié à des réservoirs destinés à dissocier l'émulsion utilisée et à des réservoirs (22) pour la préparation séparée de ces composants huileux et aqueux, lesdits réservoirs étant de leur côté reliés à des conduites de retour (38, 39) pour les phases liquides séparées huile/eau vers les appareils de dispersion (15, 16),
caractérisée en ce que
- une conduite (51) qui mène une phase huileuse depuis le réservoir de captage et de séparation (22) pour l'émulsion usée débouche dans un réservoir de collecte d'huile (53), qui est relié à une installation de purification d'huile (41) pour l'huile en circulation et à un réservoir d'huile purifiée, et en ce qu'ensuite la conduite d'huile pure (38), reliée à un réservoir d'huile fraîche (44), est reliée à l'appareil de dispersion (15, 16), et en ce qu'une conduite de sortie (45) de l'installation de purification d'huile (41) ramène une phase mélangée vers le réservoir de captage et de séparation (22),
- une conduite sous pression (46) qui amène la phase aqueuse hors du réservoir de captage et de séparation (22) pour l'émulsion usée, mène à un réservoir d'eau pure (48) avec interposition d'un filtre (47), la conduite de sortie du réservoir d'eau pure (48), également reliée à un réservoir d'eau fraîche (49), étant reliée en tant que conduite d'eau pure (39) à l'appareil de dispersion (15, 16), et une autre conduite de sortie (50) du réservoir d'eau pure (48), ramène une phase mélangée vers le réservoir de captage et de séparation (22),
- un appareil de mesure (31, 31') est agencé dans la conduite d'émulsion derrière l'appareil de dispersion (15, 16) afin de surveiller la concentration en huile et le degré de dispersion de l'émulsion, ledit appareil de mesure étant relié à un dispositif de régulation (32) et à des organes de réglage correspondants (32', 32'') pour la pression et la température dans les conduites de retour pour l'huile pure (38) et l'eau pure (39),
- les appareils de dispersion individuels (15, 16) forment simultanément des buses pour l'émulsion, et plusieurs tels appareils de dispersion sont agencés sur des tiges de pulvérisation directement devant les cylindres (4, 6 ; 5, 7), ou devant la fente de laminage (11) de la cage de laminoir (1).

7. Installation de recirculation d'émulsion selon la revendication 6, caractérisée en ce qu'un échangeur de chaleur, ou un dispositif de chauffage (25, 26 ; 29, 30) et une pompe de pression (23, 24 ; 27, 28) sont agencés dans les conduites de retour (38, 39) des phases liquides séparées huile/eau.

8. Installation de recirculation d'émulsion selon l'une ou l'autre des revendications 6 et 7, caractérisée en ce que plusieurs buses à émulsion (12, 13) sont groupées par zones le long de l'axe de laminage et/ou au-dessus ou au-dessous de la bande à laminer (8), et sont associées à un appareil de dispersion (15, 16) avec des dispositifs correspondants de mesure et de régulation (31, 32).

9. Installation de recirculation d'émulsion selon l'une au moins des revendications 6 à 8, caractérisée en ce que le dispositif de régulation (32) pour la pression et la température dans les conduites d'huile pure (19, 20) ou les conduites d'eau pure (17, 18) est relié - en termes de métrologie - à un organe de mesure (52) des contraintes de traction agencé derrière de laminoir (1) et transversalement par rapport à la bande à laminer.
